# FASCICULE DE BREVET EUROPEEN

(11) **EP 3 433 844 B1**
(45) Date de publication et mention de la délivrance du brevet: **10.07.2024**
(21) Numéro de dépôt: 17716572.7
(22) Date de dépôt: 21.03.2017
(51) Int. Cl.: G08G 1/16, B62D 15/02, B60W 30/12, B60W 50/14, B60W 50/08, G06F 9/445, B60W 10/20, B60W 50/00

(54) **DISPOSITIF D'AIDE A LA CONDUITE**
FAHRASSISTENZVORRICHTUNG
DRIVING AID DEVICE

(30) Priorité: 22.03.2016 FR 1652459
(43) Date de publication de la demande: 30.01.2019
(73) Titulaire: Ampere SAS, 92100 Boulogne-Billancourt (FR)
(72) Inventeur: MINOIU-ENACHE, Nicoleta, 78000 Versailles (FR); GEOFFRIAULT, Maud, 91300 Massy (FR); MENANTEAU, Etienne, 75015 Paris (FR)
(74) Mandataire: Renault Group
(86) Numéro de dépôt international: PCT/FR2017/050660
(87) Numéro de publication internationale: WO 2017/162979

(56) Documents cités:
- EP-A1- 2 930 081
- WO-A1-2013/185901
- DE-A1- 102008 055 876
- DE-A1- 102012 002 318

## Description

### DOMAINE TECHNIQUE AUQUEL SE RAPPORTE L'INVENTION

La présente invention concerne de manière générale l'activation et la désactivation de modules d'aide à la conduite par un utilisateur.

Elle concerne plus particulièrement un dispositif d'aide à la conduite.

L'invention s'applique particulièrement avantageusement dans le cas où l'on souhaite pouvoir utiliser de tels dispositifs d'aide à la conduite ayant la même conception dans des véhicules de configuration variable.

### ARRIERE-PLAN TECHNOLOGIQUE

On prévoit couramment de nos jours d'équiper les véhicules automobiles de divers dispositifs d'aide à la conduite.

Ces dispositifs permettent d'améliorer la sécurité et le confort de conduite du véhicule concerné. On connait par exemple le document WO2013/185901 qui décrit un système d'aide à la conduite comprenant un système de régulation de vitesse et un système d'avertissement de sortie de voie, ou encore le document EP2930081 qui décrit une méthode de transition entre un mode de conduite manuelle, un mode de conduite partiellement et un mode de conduite autonome, ou encore le document DE102008055876 qui décrit un système d'affichage de l'état de systèmes d'assistance à la conduite.

Ils peuvent toutefois s'avérer inadaptés, voire gênants, dans certaines situations de conduite et il est donc souhaitable de prévoir qu'un utilisateur (en général le conducteur du véhicule) puisse activer ou désactiver les fonctionnalités fournies par ces dispositifs.

Par ailleurs, les différences de configuration entre véhicules de différents types obligent classiquement à prévoir des dispositifs d'aide à la conduite spécifiquement conçus pour une configuration donnée de véhicule, ce qui alourdit la phase de conception de ces dispositifs et complique leur implantation dans les véhicules et leur suivi en phase de fonctionnement (après-vente).

### OBJET DE L'INVENTION

Dans ce contexte, l'invention propose un dispositif d'aide à la conduite tel que défini par la revendication indépendante 1.

L'activation et la désactivation des modules d'aide à la conduite peuvent ainsi être effectuées en fonction soit d'informations d'activation et de désactivation (générées par exemple par un système d'interface utilisateur), soit de l'actionnement d'un bouton (qui peut former un autre système d'interface utilisateur). Le dispositif d'aide à la conduite peut ainsi être utilisé dans différents types de véhicule.

Par ailleurs, une information de configuration permet de définir la configuration courante du véhicule et d'adapter le fonctionnement du dispositif à cette configuration (un actionnement du bouton n'ayant pas le même effet selon la valeur de l'information de configuration).

D'autres caractéristiques avantageuses et non limitatives sont les suivantes :
- le dispositif d'aide à la conduite comprend un système d'interface utilisateur incluant un écran et conçu pour produire l'information de désactivation et l'information d'activation du second module ;
- le dispositif d'aide à la conduite comprend un module de gestion d'affichage conçu pour commander l'affichage d'un menu interactif, dépendant de l'information de configuration, sur ledit écran ;
- le module de sélection est conçu, lorsque les premier et second modules sont activés, pour désactiver les premier et second modules à réception d'une autre information d'actionnement du bouton, c'est-à-dire une nouvelle information d'actionnement générée par un nouvel actionnement du bouton ;
- le module de sélection est conçu pour faire basculer le fonctionnement, à la mise sous tension du dispositif, dans un premier mode, dans lequel les premier et second modules sont désactivés, dans un second mode, dans lequel le premier module est activé et le second module est désactivé, ou dans un troisième mode, dans lequel les premier et second modules sont activés, en fonction au moins de ladite information de configuration et d'au moins une information d'initialisation ;
- l'information de configuration dépend d'une donnée de configuration mémorisée dans une mémoire non-volatile ;
- le premier module est un module d'avertissement ;
- le premier module est conçu pour générer une alerte de sortie de voie ;
- le second module est un module de correction de trajectoire ;
- le second module est conçu pour commander un système de commande de direction.

L'invention propose également un véhicule (par exemple un véhicule automobile) équipé d'un dispositif d'aide à la conduite tel qu'évoqué ci-dessus.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 représente schématiquement les éléments d'un système électronique embarqué dans un véhicule utiles à la compréhension de l'invention
- la figure 2 représente les fonctionnalités d'un module de sélection conforme à l'invention sous la forme d'une machine à états.

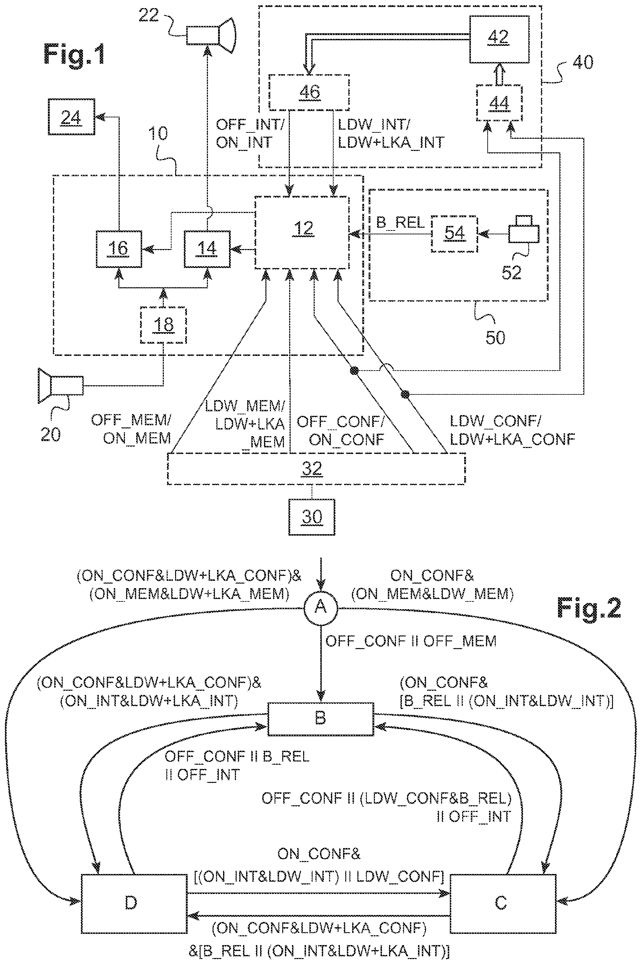

La figure 1 représente schématiquement certains éléments d'un système embarqué dans un véhicule. Ces éléments permettent en particulier, comme expliqué ci-après, de fournir une aide à la conduite destinée au conducteur du véhicule.

Le système embarqué de la figure 1 comprend un dispositif électronique 10, réalisé ici sous la forme d'une unité électronique de commande (parfois dénommée ECU pour "*Electronic Control Unit*") dédiée aux fonctions d'aide à la conduite.

Le dispositif électronique 10 comprend un module de sélection 12 (dont le fonctionnement est décrit plus bas en référence à la figure 2), un module d'avertissement 14, un module de correction de trajectoire 16 et un module de réception 18 d'images générées par un capteur d'image 20 (par exemple une caméra vidéo).

Les modules 12, 14, 16, 18 du dispositif électronique 10 sont ici mis en oeuvre sous forme logicielle, c'est-à-dire que chaque module 12, 14, 16, 18 du dispositif électronique 10 est mis en oeuvre du fait de l'exécution, par un processeur du dispositif électronique 10, d'un ensemble d'instructions mémorisées dans une mémoire du dispositif électronique 10.

En variante, un ou plusieurs desdits modules pourrai(en)t être mis en oeuvre au moyen d'un circuit électronique dédié.

Le module d'avertissement 14 offre une fonctionnalité d'avertissement en cas de sortie de voie, ou LDW pour "*Lane Departure Warning*", et forme ainsi un premier module d'aide à la conduite.

Précisément, le module d'avertissement 14 analyse les images reçues du capteur d'image 20 (via le module de réception 18), identifie dans ces images la voie de circulation empruntée par le véhicule, détecte éventuellement une sortie (ou un risque de sortie) de voie du véhicule et génère une alerte destinée au conducteur en cas de détection de sortie de voie (ou de risque de sortie de voie).

L'alerte est par exemple un signal sonore émis par un haut-parleur 22 commandé par le module d'avertissement 14 en cas de détection de sortie de voie (ou de risque de sortie de voie). En variante ou en complément, l'alerte peut être un signal haptique, transmis par exemple au conducteur par génération de vibrations au niveau du volant.

Le module de correction de trajectoire 16 offre une fonctionnalité de maintien du véhicule dans la voie de circulation empruntée, ou LKA pour "*Lane Keeping Assist*" (parfois dénommée "*Lane Departure Avoidance*")*.* Le module de correction de trajectoire 16 forme ainsi un second module d'aide à la conduite.

Précisément, le module de correction de trajectoire 16 analyse les images reçues du capteur d'image 20 (via le module de réception 18), identifie dans ces images la voie de circulation empruntée par le véhicule, détecte éventuellement une sortie (ou un risque de sortie) de voie du véhicule et émet une commande de correction de trajectoire à destination d'un système de commande de direction 24 (par exemple un système permettant une assistance de direction) en cas de détection de sortie de voie (ou de risque de sortie de voie).

Le système embarqué de la figure 1 comprend une mémoire non-volatile 30 (ici une mémoire non-volatile réinscriptible, par exemple de type EEPROM ou de type mémoire Flash) et un module de gestion de mémoire 32 apte à lire les données mémorisées dans la mémoire 30 et à générer des signaux en fonction des données lues, par exemple sur un bus implanté dans le système embarqué (ici un bus de type CAN pour "*ControllerArea Network*")*.* Les signaux ainsi générés et émis représentent des informations destinées aux autres éléments du système embarqué.

En particulier, le module de gestion de mémoire 32 est ainsi conçu pour émettre :
- une information OFF_CONF ou une information ON_CONF selon la valeur (par exemple respectivement 0 ou 1) d'une première donnée de configuration (ici codée sur 1 bit) mémorisée dans la mémoire 30 ;
- une information LDW_CONF ou une information LDW+LKA_CONF selon la valeur (par exemple respectivement 0 ou 1) d'une seconde donnée de configuration (ici codée sur 1 bit) mémorisée dans la mémoire 30 ;
- une information OFF_MEM ou une information ON_MEM selon la valeur (par exemple respectivement 0 ou 1) d'une première donnée d'initialisation (ici codée sur 1 bit) mémorisée dans la mémoire 30 ;
- une information LDW_MEM ou une information LDW+LKA_MEM selon la valeur (par exemple respectivement 0 ou 1) d'une seconde donnée d'initialisation (ici codée sur 1 bit) mémorisée dans la mémoire 30.

Les première et seconde données de configuration sont mémorisées dans la mémoire 30 lors de la fabrication du véhicule et représentent les fonctionnalités autorisées pour le véhicule concerné :
- lorsque la première donnée de configuration vaut 0 (ce qui provoque l'émission de l'information OFF_CONF), ni le premier module 14 ni le second module 16 n'est activable ;
- lorsque la première donnée de configuration vaut 1 et la seconde donnée de configuration vaut 0 (ce qui provoque l'émission des informations ON_CONF et LDW_CONF), seul le premier module 14 est activable ;
- lorsque la première donnée de configuration vaut 1 et la seconde donnée de configuration vaut 1 (ce qui provoque l'émission des informations ON_CONF et LDW+LKA_CONF), le premier module 14 et le second module 16 sont activables.

La première donnée de configuration indique donc la possibilité d'activer le premier module 14, tandis que la seconde donnée de configuration indique la possibilité d'activer le second module 16 (la possibilité d'activer le second module 16 sans activation du premier module 14 n'étant en outre pas envisagée ici).

Les première et seconde données de configuration ne peuvent être modifiées que par une personne autorisée, par exemple lors d'un entretien du véhicule dans un garage accrédité.

Les première et seconde données d'initialisation désignent quant à elles l'état d'activation des modules 14, 16 lors de la précédente utilisation du système (c'est-à-dire au moment où le système embarqué a été mis hors tension lors de la précédente utilisation). Ceci permet à l'utilisateur de retrouver le système d'assistance à la conduite dans l'état atteint lors de la précédente utilisation, comme expliqué ci-dessous.

Le module de gestion de mémoire 32 peut avoir d'autres fonctionnalités que celles décrites ici. Par ailleurs, bien que le module de gestion de mémoire 32 soit représenté comme un module externe au dispositif électronique 10 en figure 1, il pourrait en variante être intégré (ainsi éventuellement que la mémoire 30) au dispositif électronique 10.

Le système embarqué de la figure 1 comprend également un premier système d'interface utilisateur 40, qui inclut un écran tactile 42, un module de gestion d'affichage 44 et un module de gestion des entrées 46.

Le module de gestion d'affichage 44 peut notamment commander l'affichage sur l'écran tactile 42 d'un menu interactif permettant à l'utilisateur (généralement le conducteur du véhicule) de choisir au plus parmi les trois modes de fonctionnement suivants (par exemple en touchant un bouton virtuel associé au mode de fonctionnement choisi) :
- module d'avertissement 14 et module de correction de trajectoire 16 désactivés (premier mode de fonctionnement) ;
- module d'avertissement 14 activé et module de correction de trajectoire 16 désactivé (second mode de fonctionnement) ;
- module d'avertissement 14 et module de correction de trajectoire 16 activés (troisième mode de fonctionnement).

Les modes de fonctionnement proposés à l'utilisateur (et affichés par conséquent dans le menu interactif par le module de gestion d'affichage 44) dépendent toutefois de la configuration du véhicule définie par les première et seconde données de configuration précitées et connue par le module de gestion d'affichage 44 au moyen des informations OFF_CONF/ON_CONF, LDW_CONF/LDW+LKA_CONF reçues (ici sur le bus CAN) du module de gestion de mémoire 32.

Par exemple, si l'information OFF_CONF est présente sur le bus CAN, le module de gestion d'affichage 44 n'affiche aucun des modes susmentionnés sur l'écran tactile 42 (mais éventuellement un message du type "*Fonctions non disponibles*")*.*

Selon un autre exemple, si les informations ON_CONF et LDW_CONF sont présentes sur le bus CAN, le module de gestion d'affichage 44 ne propose à l'utilisateur que les deux premiers modes susmentionnés.

Le module de gestion des entrées 46 détecte le bouton virtuel touché par l'utilisateur et émet sur le bus déjà mentionné des informations qui dépendent du mode associé au bouton virtuel touché :
- une information OFF _INT quand le bouton touché correspond au premier mode de fonctionnement (module d'avertissement 14 et module de correction de trajectoire 16 désactivés) ;
- des informations ON_INT et LDW_INT quand le bouton touché correspond au second mode de fonctionnement (module d'avertissement 14 activé et module de correction de trajectoire 16 désactivé) ;
- des informations ON_INT et LDW+LKA_INT quand le bouton touché correspond au troisième mode de fonctionnement (module d'avertissement 14 et module de correction de trajectoire 16 activés).

Le système embarqué de la figure 1 comprend également un second système d'interface utilisateur 50, qui inclut ici un bouton poussoir 52 et un circuit de traitement 54.

Le circuit de traitement 54 est conçu pour émettre une information B_REL sur le bus déjà mentionné (ici un bus de type CAN) au moment où le bouton poussoir 52 est relâché (ce qui permet de n'émettre qu'une fois l'information B_REL à chaque appui sur le bouton poussoir 52, quelle que soit la durée de cet appui).

Le système embarqué de la figure 1 comprend également le capteur d'image 20, le haut-parleur 22 et le système de commande de direction 24 déjà mentionnés.

La figure 2 représente les fonctionnalités du module de sélection 12 sous la forme d'une machine à états.

Le dispositif électronique 10 est relié au premier système d'interface utilisateur 40, au second système d'interface utilisateur 50 et au module de gestion de mémoire 32 au moyen du bus déjà mentionné (ici un bus CAN) de sorte que le module de sélection 12 reçoit de ces éléments 32, 40, 50 les informations mentionnées ci-dessus.

Le fonctionnement du dispositif électronique 10 évolue entre les divers modes de fonctionnement en fonction des informations reçues par le module de sélection 12, comme représenté en figure 2 et décrit à présent.

Lors de la mise sous tension du dispositif électronique 10, le fonctionnement du module de sélection 12 débute dans l'état A. Cet état A est un état transitoire dans lequel le module de sélection 12 n'émet aucune commande particulière en direction du premier module 14 ou du second module 16.

Le fonctionnement passe en effet immédiatement de l'état A à l'un des trois autres états possibles B, C, D (qui correspondent respectivement aux modes de fonctionnement déjà mentionnés), selon les informations présentes sur le bus, comme expliqué à présent.

Le fonctionnement passe à l'état B si l'information OFF_CONF ou l'information OFF_MEM est présente (c'est-à-dire, comme déjà indiqué, reçue par le module de sélection 12 via le bus CAN). Ceci correspond à la condition :
OFF_CONF ∥ OFF_MEM (le symbole ∥ représentant un OU logique).

On passe ainsi de l'état A à l'état B si la première donnée de configuration a une valeur (ici 0) indiquant que le premier module d'aide à la conduite 14 ne peut pas être activé (information OFF_CONF), ou si la première donnée d'initialisation a une valeur (ici 0) indiquant qu'aucun des premier et second modules d'aide à la conduite 14, 16 n'était activé lors de la précédente mise hors tension (information OFF_MEM). (Comme déjà indiqué, le second module 16 ne peut pas être activé dès lors que le premier module 14 ne peut pas lui-même être activé.)

Dans l'état B, le module de sélection 12 désactive le premier module 14 (module d'avertissement) et le second module 16 (module de correction de trajectoire).

Toujours en partant de l'état A, le fonctionnement passe à l'état C si toutes les informations suivantes sont présentes sur le bus : ON_CONF, ON_MEM, LDW_MEM. Ceci correspond à la condition :
ON_CONF & ON_MEM & LDW_MEM (le symbole & représentant un ET logique).

On passe ainsi de l'état A à l'état C si la première donnée de configuration a une valeur (ici 1) indiquant qu'au moins un des premier et second modules d'aide à la conduite 14, 16 peut être activé (information ON_CONF) et si les première et seconde données d'initialisation ont des valeurs indiquant que, lors de la précédente mise hors tension, le premier module 14 était activé et le second module 16 inactivé (informations ON_MEM et LDW_MEM).

Dans l'état C, le module de sélection 12 active le premier module 14 (module d'avertissement) et désactive le second module 16 (module de correction de trajectoire).

Toujours en partant de l'état A, le fonctionnement passe à l'état D si toutes les informations suivantes sont présentes sur le bus : ON_CONF, LDW+LKA_CONF, ON_MEM, LDW+LKA_MEM. Ceci correspond à la condition :
ON_CONF & LDW+LKA_CONF & ON_MEM & LDW+LKA_MEM.

On passe ainsi de l'état A à l'état D si les première et seconde données de configuration ont une valeur indiquant que les deux modules d'aide à la conduite 14, 16 peuvent être activés (informations ON_CONF et LDW+LKA_CONF) et si les première et seconde données d'initialisation ont des valeurs indiquant que, lors de la précédente mise hors tension, les premier et second modules 14, 16 étaient activés (informations ON_MEM et LDW+LKA_MEM).

Dans l'état D, le module de sélection 12 active le premier module 14 (module d'avertissement) et le second module 16 (module de correction de trajectoire).

On décrit à présent les évolutions possibles à partir de l'état B (correspondant au premier mode de fonctionnement susmentionné : premier module 14 et second module 16 désactivés).

En partant de l'état B, le fonctionnement passe à l'état C lorsque la condition suivante est rencontrée :
ON_CONF & [B_REL ∥ (ON_INT & LDW_INT)].

Ceci correspond à une situation dans laquelle la première donnée de configuration indique la possible activation du premier module 14 (information ON_CONF) et dans laquelle :
- soit le bouton poussoir 52 est actionné (information B_REL) ;
- soit le bouton virtuel affiché sur l'écran tactile 42 et correspondant au second mode de fonctionnement défini ci-dessus est touché (informations ON_INT et LDW_INT).

Toujours en partant de l'état B, le fonctionnement passe à l'état D lorsque la condition suivante est rencontrée :
ON_CONF & LDW+LKA_CONF & ON_INT & LDW+LKA INT.

Ceci correspond à une situation dans laquelle la première donnée de configuration indique la possible activation des premier et second modules 14, 16 (informations ON_CONF et LDW+LKA_CONF) et dans laquelle le bouton virtuel affiché sur l'écran tactile 42 et correspondant au troisième mode de fonctionnement défini ci-dessus est touché (informations ON_INT et LDW+LKA_INT).

On remarque en effet que, dans le système proposé ici, aucune transition de l'état B à l'état D n'est prévue au moyen du bouton poussoir 52.

On décrit à présent les évolutions possibles à partir de l'état C (correspondant au second mode de fonctionnement susmentionné : premier module 14 activé et second module 16 désactivé).

En partant de l'état C, le fonctionnement passe à l'état B lorsque la condition suivante est rencontrée :
OFF_CONF ∥ (LDW_CONF & B_REL) ∥ OFF_INT.

Ceci correspond à une situation dans laquelle l'un des évènements suivants se produit :
- la première donnée de configuration est mise à une valeur indiquant qu'aucun des premier et second modules 14, 16 ne peut être activé (information OFF_CONF), ce qui peut être réalisé lors d'un entretien du véhicule, par exemple temporairement lorsque le capteur d'image 20 est défaillant (mais reste a *priori* un cas exceptionnel) ;
- le bouton poussoir 52 est actionné (information B_REL) alors que la seconde donnée de configuration (mémorisée dans la mémoire 30) indique que seul le premier module 14 (module d'avertissement) peut éventuellement être activé (information LDW_CONF) ;
- le bouton virtuel affiché sur l'écran tactile 42 et correspondant au premier mode de fonctionnement défini ci-dessus est touché (information OFF_INT).

Toujours en partant de l'état C, le fonctionnement passe à l'état D lorsque la condition suivante est rencontrée :
(ON_CONF & LDW+LKA_CONF) & [B_REL ∥ (ON_INT & LDW+LKA_INT)].

Ceci correspond à une situation dans laquelle les première et seconde données de configuration indiquent la possible activation des premier et second modules 14, 16 (informations ON_CONF et LDW_LKA_CONF) et dans laquelle :
- soit le bouton poussoir 52 est actionné (information B_REL) ;
- soit le bouton virtuel affiché sur l'écran tactile 42 et correspondant au troisième mode de fonctionnement défini ci-dessus est touché (informations ON_INT et LDW+LKA_INT).

On décrit à présent les évolutions possibles à partir de l'état D (correspondant au troisième mode de fonctionnement susmentionné : premier module 14 et second module 16 activés).

En partant de l'état D, le fonctionnement passe à l'état B lorsque la condition suivante est rencontrée :
OFF_CONF ∥ B_REL ∥ OFF_INT.

Ceci correspond à une situation dans laquelle l'un des évènements suivants se produit :
- la première donnée de configuration est mise à une valeur indiquant qu'aucun des premier et second modules 14, 16 ne peut être activé (information OFF_CONF), ce qui peut être réalisé par exemple lors d'un entretien du véhicule, à la demande de l'utilisateur (mais reste a *priori* un cas exceptionnel) ;
- le bouton poussoir 52 est actionné (information B_REL) ;
- le bouton virtuel affiché sur l'écran tactile 42 et correspondant au premier mode de fonctionnement défini ci-dessus est touché (information OFF_INT).

Toujours en partant de l'état D, le fonctionnement passe à l'état C lorsque la condition suivante est rencontrée :
ON_CONF & [(ON_INT & LDW_INT) ∥ LDW_CONF].

Ceci correspond à une situation dans laquelle la première donnée de configuration indique la possible activation du premier module 14 (information ON_CONF) et dans laquelle :
- soit le bouton virtuel affiché sur l'écran tactile 42 et correspondant au second mode de fonctionnement défini ci-dessus est touché (informations ON_INT et LDW_INT) ;
- soit la seconde donnée de configuration est mise à une valeur indiquant que le second module 16 ne peut être activé (information LDW_CONF), ce qui peut être réalisé éventuellement lors d'un entretien du véhicule, par exemple temporairement lorsqu'une défaillance est constaté dans le système de commande de direction 24 (mais reste a *priori* un cas exceptionnel).

Afin de traiter les cas où deux informations changent simultanément (par exemple en cas d'appui simultané sur le bouton poussoir 52 et sur un bouton virtuel affiché sur l'écran tactile 42), on prévoit ici que le module de sélection 12 utilise l'ordre de priorité suivant :
ON_CONF/OFF_CONF, LDW_CONF/LDW+LKA_CONF, ON_INT/OFF _INT, LDW INT/LDW+LKA_INT, B_REL (c'est-à-dire que le module de sélection 12 tienne compte en priorité du changement indiqué en premier dans la liste).

On remarque que le module de sélection 12 qui vient d'être décrit fonctionne (c'est-à-dire permet de commander l'activation et la désactivation de chacun des modules d'aide à la conduite 14, 16) quelle que soit la configuration du véhicule, c'est-à-dire que chacun des éléments listés ci-dessous soit utilisé ou non dans le véhicule concerné :
- le premier système d'interface utilisateur 40 ;
- le second système d'interface utilisateur 50 ;
- les données d'initialisation mémorisées dans la mémoire 30,
dès lors que l'un des deux systèmes d'interface utilisateur 40, 50 au moins est présent.

Le dispositif électronique 10 peut donc être utilisé dans différents types de véhicule de configuration variable.

En variante, plutôt que de toucher le bouton virtuel, l'utilisateur (généralement le conducteur du véhicule) commande à la voix le mode de fonctionnement choisi, le signal vocal étant traité par un module de reconnaissance vocale (non représenté), du système d'interface utilisateur 40, qui actionne le bouton virtuel associé au mode de fonctionnement commandé par l'utilisateur. Le module de gestion des entrées 46 détecte le bouton virtuel actionné à la voix par l'utilisateur et émet sur le bus déjà mentionné des informations qui dépendent du mode associé au bouton virtuel actionné :
- une information OFF _INT quand le bouton actionné correspond au premier mode de fonctionnement (module d'avertissement 14 et module de correction de trajectoire 16 désactivés) ;
- des informations ON_INT et LDW_INT quand le bouton actionné correspond au second mode de fonctionnement (module d'avertissement 14 activé et module de correction de trajectoire 16 désactivé) ;
- des informations ON_INT et LDW+LKAJINT quand le bouton actionné correspond au troisième mode de fonctionnement (module d'avertissement 14 et module de correction de trajectoire 16 activés).

Le module de sélection 12 reçoit l'information de désactivation OFF_IN et l'information d'activation du second module LDW+LKA_INT produites par le système d'interface utilisateur 40.

## Revendications

1. Dispositif d'aide à la conduite (10) comprenant un premier module d'aide à la conduite (14) et un second module d'aide à la conduite (16),
comprenant un module de sélection (12) conçu, lorsque le premier module (14) est activé et le second module (16) désactivé :
- pour désactiver le premier module (14) à réception d'une information de désactivation (OFF_INT) ;
- pour activer le second module (16) à réception d'une information d'activation (LDW+LKA_INT) du second module (16)
**caractérisé en ce que** le module de sélection (12) permet en outre, lorsque le premier module (14) est activé et le second module (16) désactivé :
- de désactiver le premier module (14) lorsqu'une information de configuration vaut une première valeur (LDW_CONF), à réception d'une information d'actionnement (B_REL) d'un bouton (52) ;
- d'activer le second module (16) lorsque l'information de configuration vaut une seconde valeur (LDW+LKA_CONF), à réception de ladite information d'actionnement (B_REL).

2. Dispositif d'aide à la conduite (10) selon la revendication 1, comprenant un système d'interface utilisateur (40) incluant un écran (42) et conçu pour produire l'information de désactivation (OFF_INT) et l'information d'activation du second module (LDW+LKA_INT).

3. Dispositif d'aide à la conduite (10) selon la revendication 2, comprenant un module de gestion d'affichage (44) conçu pour commander l'affichage d'un menu interactif, dépendant de l'information de configuration, sur ledit écran (42).

4. Dispositif d'aide à la conduite (10) selon l'une des revendications 1 à 3, dans lequel le module de sélection (12) est conçu, lorsque les premier et second modules (14, 16) sont activés, pour désactiver les premier et second modules (14, 16) à réception d'une autre information d'actionnement (B_REL) du bouton (52), c'est-à dire une nouvelle information d'actionnement (B_REL) générée par un nouvel actionnement du bouton (52).

5. Dispositif d'aide à la conduite (10) selon l'une des revendications 1 à 4, dans lequel le module de sélection (12) est conçu pour faire basculer le fonctionnement, à la mise sous tension du dispositif (10), dans un premier mode, dans lequel les premier et second modules (14, 16) sont désactivés, dans un second mode, dans lequel le premier module (14) est activé et le second module (16) est désactivé, ou dans un troisième mode, dans lequel les premier et second modules 14, 16) sont activés, en fonction au moins de ladite information de configuration et d'au moins une information d'initialisation.

6. Dispositif d'aide à la conduite (10) selon l'une des revendications 1 à 5, dans lequel l'information de configuration dépend d'une donnée de configuration mémorisée dans une mémoire non-volatile (30).

7. Dispositif d'aide à la conduite (10) selon l'une des revendications 1 à 6, dans lequel le premier module (14) est un module d'avertissement.

8. Dispositif d'aide à la conduite (10) selon la revendication 7, dans lequel le premier module (14) est conçu pour générer une alerte de sortie de voie.

9. Dispositif d'aide à la conduite (10) selon l'une des revendications 1 à 8, dans lequel le second module (16) est un module de correction de trajectoire.

10. Dispositif d'aide à la conduite (10) selon la revendication 9, dans lequel le second module (16) est conçu pour commander un système de commande de direction.

## Patentansprüche

1. Fahrassistenzvorrichtung (10), die ein erstes Fahrassistenzmodul (14) und ein zweites Fahrassistenzmodul (16) beinhaltet,
beinhaltend ein Auswahlmodul (12), das, wenn das erste Modul (14) aktiviert und das zweite Modul (16) deaktiviert ist, zu Folgendem ausgelegt ist:
- Deaktivieren des ersten Moduls (14) bei Empfang einer Information zur Deaktivierung (OFF_INT);
- Aktivieren des zweiten Moduls (16) bei Empfang einer Information zur Aktivierung (LDW+LKA_INT) des zweiten Moduls (16),
**dadurch gekennzeichnet, dass** das Auswahlmodul (12), wenn das erste Modul (14) aktiviert ist und das zweite Modul (16) deaktiviert ist, ferner Folgendes ermöglicht:
- Deaktivieren des ersten Moduls (14), wenn eine Konfigurationsinformation einen ersten Wert (LDW_CONF) aufweist, bei Empfang einer Information über eine Betätigung (B_REL) einer Taste (52);
- Aktivieren des zweiten Moduls (16), wenn die Konfigurationsinformation einen zweiten Wert (LDW+LKA_CONF) aufweist, bei Empfang der Betätigungsinformation (B_REL).

2. Fahrassistenzvorrichtung (10) nach Anspruch 1, die ein Benutzerschnittstellensystem (40) beinhaltet, das einen Bildschirm (42) umfasst und dazu ausgelegt ist, die Information zur Deaktivierung (OFF_INT) und die Information zur Aktivierung des zweiten Moduls (LDW+LKA_INT) zu produzieren.

3. Fahrassistenzvorrichtung (10) nach Anspruch 2, die ein Anzeigeverwaltungsmodul (44) beinhaltet, das dazu ausgelegt ist, die Anzeige eines interaktiven Menüs, das von der Konfigurationsinformation abhängt, auf dem Bildschirm (42) zu steuern.

4. Fahrassistenzvorrichtung (10) nach einem der Ansprüche 1 bis 3, wobei das Auswahlmodul (12), wenn das erste und das zweite Modul (14, 16) aktiviert sind, dazu ausgelegt ist, das erste und das zweite Modul (14, 16) bei Empfang einer weiteren Information über eine Betätigung (B_REL) der Taste (52), das heißt einer neuen Betätigungsinformation (B_REL), die durch ein erneutes Betätigen der Taste (52) erzeugt wird, zu deaktivieren.

5. Fahrassistenzvorrichtung (10) nach einem der Ansprüche 1 bis 4, wobei das Auswahlmodul (12) dazu ausgelegt ist, bei Einschalten der Vorrichtung (10) den Betrieb in Abhängigkeit von mindestens der Konfigurationsinformation und mindestens einer Initialisierungsinformation in einen ersten Modus, in dem das erste und das zweite Modul (14, 16) deaktiviert sind, in einen zweiten Modus, in dem das erste Modul (14) aktiviert und das zweite Modul (16) deaktiviert ist, oder in einen dritten Modus, in dem das erste und das zweite Modul (14, 16) aktiviert sind, umzuschalten.

6. Fahrassistenzvorrichtung (10) nach einem der Ansprüche 1 bis 5, wobei die Konfigurationsinformation von einer Konfigurationsangabe abhängt, die in einem nichtflüchtigen Speicher (30) gespeichert ist.

7. Fahrassistenzvorrichtung (10) nach einem der Ansprüche 1 bis 6, wobei das erste Modul (14) ein Warnmodul ist.

8. Fahrassistenzvorrichtung (10) nach Anspruch 7, wobei das erste Modul (14) dazu ausgelegt ist, einen Spurverlassensalarm zu erzeugen.

9. Fahrassistenzvorrichtung (10) nach einem der Ansprüche 1 bis 8, wobei das zweite Modul (16) ein Bahnkorrekturmodul ist.

10. Fahrassistenzvorrichtung (10) nach Anspruch 9, wobei das zweite Modul (16) dazu ausgelegt ist, ein Lenksteuersystem zu steuern.

## Claims

1. Driver assistance device (10) comprising a first driver-assistance module (14) and a second driver-assistance module (16),
comprising a selecting module (12) designed, when the first module (14) is activated and the second module (16) deactivated:
- to deactivate the first module (14) on receipt of deactivation information (OFF_INT); and
- to activate the second module (16) on receipt of activation information (LDW+LKA_INT) regarding the second module (16);
**characterized in that** the selecting module (12) further makes it possible, when the first module (14) is activated and the second module (16) deactivated:
- to deactivate the first module (14) when configuration information is equal to a first value (LDW_CONF), on receipt of activation information (B_REL) from a button (52);
- to activate the second module (16) when the configuration information is equal to a second value (LDW+LKA_CONF), on receipt of said activation information (B_REL).

2. Driver assistance device (10) according to Claim 1, comprising a user-interface system (40) including a screen (42) and designed to produce the deactivation information (OFF_INT) and the activation information regarding the second module (LDW+LKA_INT).

3. Driver assistance device (10) according to Claim 2, comprising a display-managing module (44) designed to control the display of an interactive menu, dependent on the configuration information, on said screen (42).

4. Driver assistance device (10) according to one of Claims 1 to 3, wherein the selecting module (12) is designed, when the first and second modules (14, 16) are activated, to deactivate the first and second modules (14, 16) on receipt of other activation information (B_REL) from the button (52), i.e. new activation information (B_REL) generated via a new activation of the button (52).

5. Driver assistance device (10) according to one of Claims 1 to 4, wherein the selecting module (12) is designed to make operation switch, on power-up of the device (10), to a first mode, in which the first and second modules (14, 16) are deactivated, to a second mode, in which the first module (14) is activated and the second module (16) is deactivated, or to a third mode, in which the first and second modules (14, 16) are activated, depending at least on said configuration information and on at least one piece of initialization information.

6. Driver assistance device (10) according to one of Claims 1 to 5, wherein the configuration information depends on a configuration datum stored in a non-volatile memory (30).

7. Driver assistance device (10) according to one of Claims 1 to 6, wherein the first module (14) is a warning module.

8. Driver assistance device (10) according to Claim 7, wherein the first module (14) is designed to generate a lane departure warning.

9. Driver assistance device (10) according to one of Claims 1 to 8, wherein the second module (16) is a path-correcting module.

10. Driver assistance device (10) according to Claim 9, wherein the second module (16) is designed to control a steering control system.
